# FASCICULE DE BREVET EUROPEEN

(11) **EP 1 058 917 B1**
(45) Date de publication et mention de la délivrance du brevet: **28.11.2001**
(21) Numéro de dépôt: 99904909.1
(22) Date de dépôt: 18.02.1999
(51) Int. Cl.: G07F 7/10

(54) **CHARGEMENT DE PROGRAMMES INFORMATIQUES EN BLOCS**
BLOCKWEISES LADEN VON COMPUTERPROGRAMMEN
LOADING BLOCK COMPUTER PROGRAMMES

(30) Priorité: 23.02.1998 FR 9802147
(43) Date de publication de la demande: 13.12.2000
(73) Titulaire: SCHLUMBERGER Systèmes, 92120 Montrouge (FR)
(72) Inventeur: THIRIET, Fabien, F-45100 Orléans (FR)
(74) Mandataire: Macquet, Christophe
(86) Numéro de dépôt international: FR9900370
(87) Numéro de publication internationale: WO9942960

(56) Documents cités:
- EP-A- 0 559 205
- EP-A- 0 563 997
- EP-A- 0 795 844
- WO-A-90/05960
- WO-A-94/24673
- US-A- 5 161 231

## Description

L'invention concerne le chargement de programmes informatiques dans une mémoire d'un objet portable et notamment dans une mémoire d'une carte à puce.

Les cartes à puce sont des objets portables ou portatifs constitués, d'une part, d'un corps de carte et, d'autre part, d'une puce.

La puce comprend un circuit intégré à la surface d'un substrat silicium, ledit circuit définissant notamment des zones mémoire de la puce ainsi qu'une partie micro-contrôleur assurant en particulier la gestion des données entre les différentes zones mémoire.

Cette puce, reportée au sein d'un module électronique ou non, est intégrée au corps de carte et communique avec le monde extérieur au moyen de contacts électriques ou d'une antenne. Selon son mode de communication, la carte est dite à contacts ou sans contact, étant toutefois entendu que des cartes dites combinées sont susceptibles de communiquer selon les deux modes de communication avec et sans contact.

Classiquement, les cartes à puce sont utilisées dans des applications dans lesquelles elles identifient leur porteur et permettent par exemple audit porteur d'obtenir un droit tel qu'un droit d'accès à des services ou d'effectuer des transactions.

L'accès à des services exige parfois qu'un programme informatique soit chargé dans une mémoire de la carte (voir EP-A-795444).

Néanmoins, ces programmes informatiques ont des tailles de plus en plus importantes qui atteignent aujourd'hui 8 kBytes et atteindront 64 kBytes dans un proche avenir.

Or, les cadences de fonctionnement du micro-contrôleur de la carte ainsi que le temps d'écriture des mémoires ne permettent pas un chargement instantané de programmes importants.

Par exemple, la durée de chargement d'un programme de 8 kBytes dans une carte sans contact à partir d'un dispositif émetteur est de l'ordre d'une minute, ce qui est bien trop long pour permettre un chargement du programme dans le temps moyen durant lequel la carte est dans le champ électro-magnétique utile dudit dispositif émetteur, en particulier si l'on tient compte du fait que ce dispositif doit gérer une pluralité de cartes ainsi que les collisions éventuelles entre lesdites cartes.

En pratique, le chargement est alors interrompu et il est alors nécessaire d'attendre que le temps passé dans le champ d'un autre dispositif émetteur soit suffisamment long pour que le chargement du programme s'effectue dans sa totalité avec succès.

Aussi, compte tenu de ce qui précède, un problème que se propose de résoudre l'invention est de permettre le chargement d'un programme sans que les contraintes de temps de chargement influent réellement sur le chargement dudit programme avec succès.

Au regard de ce problème, la solution proposée de l'invention a pour objet un procédé de chargement de programmes informatiques dans une mémoire d'un objet portable à mémoire disposant d'un mode de fonctionnement sans contact selon la revendication 1.

De manière avantageuse, le procédé de l'invention comporte en outre les étapes suivantes selon lesquelles : - des moyens FLG de l'objet portable indiquent à un dispositif émetteur EMj l'état en chargement FLG = Y ou non FLG = N de l'objet portable ; et - préalablement à la reprise du chargement au bloc BLKi, l'état en chargement ou non de l'objet portable est vérifié.

L'invention sera mieux comprise à la lecture de l'exposé non limitatif qui va suivre.

Le procédé de l'invention s'applique aux objets portables ou portatifs à mémoire et, préférentiellement, à des cartes à puce dont le format ainsi que les caractéristiques sont définies dans les normes ISO 78-10 et 78-16 dont le contenu est incorporé dans le présent exposé par citation de référence ou s'applique, plus préférentiellement, à de telles cartes disposant cependant d'un mode de fonctionnement sans contact éventuellement en sus d'un mode de fonctionnement classique, à contacts lesdites cartes étant caractérisées notamment dans les normes ISO 14443.

Les cartes à puce sans contact possèdent un circuit intégré dans un substrat silicium, l'ensemble, circuit et substrat, constituant la puce, ladite puce étant soit intégrée dans un module électronique lui-même intégré dans un corps de carte, ou alors, intégrée directement dans ledit corps de carte.

Le circuit intégré définit différentes mémoires de la puce et notamment au moins une mémoire volatile RAM et au moins une mémoire non volatile ROM, cette mémoire non volatile ou l'une des mémoires non volatiles étant, le cas échéant, une mémoire électriquement programmable et effaçable EEPROM ou une mémoire du type Flash PROM. En outre, le circuit intégré définit une unité centrale CPU ou micro-contrôleur, ladite unité centrale effectuant en particulier la gestion des données entre les différentes mémoires, par l'intermédiaire d'un bus d'adresses et d'un bus de données, ladite gestion étant cadencée selon des cycles d'horloge.

L'invention vise au chargement d'un programme informatique PRG dans une des mémoires de la carte et notamment dans une mémoire non volatile du type EEPROM de ladite carte.

Un tel programme PRG est un ensemble de données informatiques définissant par exemple un ensemble d'instructions exécutables par la carte. C'est le cas de programmes applicatifs rédigés dans des langages de haut niveau du type Java appelés applets. Il s'agit, dans un exemple, de programmes permettant l'accès à des services tels que, dans le cas d'une carte bancaire, d'un programme permettant à la carte d'effectuer des applications de porte-monnaie électronique. La taille des programmes PRG est plus ou moins importante. Cependant, l'invention montre un grand intérêt dans le cas de programmes de grande taille notamment de l'ordre ou supérieure à 2 kBytes, par exemple 8 kBytes, voire 64 kBytes dont la durée pratique totale de chargement est supérieure à 5 secondes.

Dans l'exemple de réalisation décrit dans le présent exposé, le programme PRG est chargé dans la mémoire EEPROM de la carte, à partir d'un ou plusieurs lecteurs émetteurs EM1, ..., EMj, ...EMp, p étant un nombre entier naturel supérieur ou égal à 1, chaque dispositif émetteur EMj disposant d'une copie du programme ou étant susceptible d'obtenir une telle copie d'un serveur associé, sous contrôle d'un opérateur.

Pour son chargement, le programme PRG est divisé, selon l'invention, en n blocs BLK1, ..., BLKi, ..., BLKn, n étant un nombre entier naturel strictement supérieur à 1, l'ensemble des blocs BLKi ayant avantageusement une taille voisine, préférentiellement de l'ordre de l'espace mémoire RAM réservé à l'effet de tampon d'écriture et appelé mémoire tampon.

Par exemple, un programme informatique de 2 kBytes peut être divisé en huit blocs BLK1, ..., BLK8 d'environ 256 Bytes chacun.

La carte peut être dans un état de chargement, c'est-à-dire dans un état tel qu'elle attend que le programme PRG soit chargé ou non.

Lorsque la carte est dans l'état de chargement, une zone mémoire FLG de celle-ci, située dans la mémoire EEPROM, est écrite par une donnée, par exemple binaire, indicative dudit état de chargement FLG = Y. Dans le cas contraire, FLG = N.

Lorque la carte entre dans le champ électro-magnétique utile de communication d'un dispositif émetteur EM1, un dialogue sans contact s'établit entre ladite carte et ledit dispositif émetteur EM1, dialogue au cours duquel l'état de chargement de la carte est vérifié voire changé si une décision de chargement est prise alors que la carte était initialement dans l'état de non chargement FLG = N.

Dans le cas où FLG = Y et si le chargement du programme PRG n'a pas débuté, une information I(n), indicative du nombre n de blocs BLKi que la carte doit recevoir est transmise par l'émetteur EM1 à ladite carte.

Cette indication I(n) est reçue par la carte, notamment avec le bloc BLK1, l'ensemble I(n) et BLK1 étant tout d'abord enregistré dans la mémoire tampon de la carte puis pris en charge par l'unité centrale qui enregistre l'indication I(n), ou une indication I'(n) dérivée de cette indication I(n), dans une zone mémoire COUNT servant de compteur. De même, le bloc BLK1 est enregistré dans la mémoire non volatile EEPROM, à une adresse déterminée, par exemple ADD1. Lorsque ce bloc BLK1 est enregistré à cette adresse ADD1, la mémoire de comptage COUNT est décrémentée COUNT = n-1, signifiant qu'il reste n-1 blocs à charger.

Si le dialogue entre le dispositif émetteur EM1 et la carte n'est pas interrompu le bloc BLK2 est reçu, enregistré en mémoire tampon, puis en EEPROM à l'adresse ADD2, notamment à la suite de ADD1 et le compteur COUNT est alors décrémenté une nouvelle fois COUNT = n-2. Il en va de même pour chacun des blocs BLKi jusqu'à BLKn.

Toutefois, dans le cas où le dialogue entre le dispositif émetteur EM1 et la carte est interrompu, par exemple, dans le cas où la carte sort du champ électro-magnétique utile de l'émetteur EM1, le chargement d'un bloc BLKi est interrompu, la carte se trouvant toujours dans l'état de chargement FLG = Y.

Il est alors nécessaire que la carte entre dans le champ d'un nouvel émetteur EMj disposant lui aussi d'une copie du programme PRG divisé en blocs BLK1, ..., BLKi, ..., BLKn pour que le chargement reprenne, ou que la carte entre à nouveau dans le champ de l'émetteur EM1. Ce nouvel émetteur EMj peut être l'émetteur EM1.

EMj interroge alors la carte lui demande si elle est dans un état de chargement. Celle-ci répond que c'est effectivement le cas, eu égard à la présence de l'indication FLG = Y.

EMj interroge alors la carte sur le nombre de blocs chargés. Celle-ci répond que i-1 blocs ont été chargés, compte tenu du fait que COUNT = i-1.

Le chargement reprend alors, avec ce nouvel émetteur EMj, au bloc BLKi et continue jusqu'au bloc BLKn, à moins qu'une nouvelle interruption rende nécessaire le passage de la carte dans le champ d'un nouvel émetteur EMj.

Lorsque le bloc BLKn est chargé, le compteur est à zéro COUNT = 0 puis la carte est mise dans l'état de non-chargement FLG = N.

Ainsi, quelle que soit la longueur du programme PRG à charger, le chargement en blocs BLKi couplé à un comptage des blocs chargés permet, en particulier dans le cas de cartes sans contact, d'effectuer un chargement de la totalité d'un programme sans que les interruptions de dialogue entre la carte et les dispositifs émetteurs nécessitent un nouveau chargement du programme depuis le début.

## Revendications

1. Procédé de chargement de programmes informatiques dans une mémoire d'un objet portable à mémoire disposant d'un mode de fonctionnement sans contact, notamment carte à puce, à partir d'un ou plusieurs dispositifs émetteurs EM1, ..., EMj, ...EMp, p étant un nombre entier, **caractérisé en ce qu'**il comporte les étapes suivantes selon lesquelles :
- le programme informatique est divisé en n blocs BLK1, ..., BLKi, ..., BLKn, n étant un nombre entier supérieur à 1 ;
- une information I(n) indicative du nombre n de blocs à charger est transmise à l'objet portable ;
- les blocs BLK1, ..., BLKi, ..., BLKn sont chargés sans contact dans une mémoire de l'objet portable ;
- le chargement des blocs BLK1, ..., BLK2, ..., BLKn est interrompu au cours du chargement d'un blocs BLKi;
- le chargement des blocs est repris au bloc BLKi; et
- chaque bloc BLKi chargé est compté dans l'objet portable.

2. Procédé selon l'une des revendications précédentes, **caractérisé en ce qu'**il comporte en outre une étape selon laquelle :
- des moyens FLG de l'objet portable indiquent à un dispositif émetteur EMj l'état en chargement FLG = Y ou non FLG = N de l'objet portable.

3. Procédé selon les revendications 1 ou 2, **caractérisé en ce qu'**il comporte en outre l'étape suivante selon laquelle :
- préalablement à la reprise du chargement au bloc BLKi, l'état en chargement ou non de l'objet portable est vérifié.

## Patentansprüche

1. Ladeverfahren für Computerprogramme in einem Speicher eines tragbaren Objektes mit Speicher, der über einen kontaktlosen Betriebsmodus verfügt, insbesondere mit Chipkarte, ausgehend von einer oder mehreren Sendevorrichtungen EM1, ..., EMj, ... EMp, wobei p eine ganze Zahl ist, **dadurch gekennzeichnet, daß** es die folgenden Stufen umfaßt, gemäß denen:
- das Computerprogramm in n Blöcke BLK1, ..., BLKi, ... BLKn unterteilt ist, wobei n eine ganze Zahl ist, die größer ist als 1;
- eine Information I(n) an das tragbare Objekt übertragen wird, die die zu übertragende Blockanzahl n anzeigt;
- die Blöcke BLK1, ..., BLKi, ..., BLKn kontaktlos in einen Speicher des tragbaren Objekts geladen werden;
- das Laden der Blöcke BLK1, ..., BLK2, ..., BLKn während des Ladens eines Blocks BLKi unterbrochen wird;
- das Laden der Blöcke im Block BLKi wieder aufgenommen wird; und
- jeder geladene Block BLKi in einem tragbaren Objekt gezählt wird.

2. Verfahren gemäß einem der vorgenannten Ansprüche, **dadurch gekennzeichnet, daß** es darüber hinaus eine Stufe umfaßt, gemäß der:
- die Mittel FLG des tragbaren Objekts einer Sendevorrichtung EMj den Ladezustand FLG = Y oder nicht FLG = N des tragbaren Objekts anzeigen.

3. Verfahren gemäß Anspruch 1 oder 2, **dadurch gekennzeichnet, daß** es darüber hinaus die folgende Stufe umfaßt, gemäß der:
- vor der Wiederaufnahme des Ladens im Block BLKi, der Ladezustand oder Nichtladezustand des tragbaren Objekts geprüft wird.

## Claims

1. Method for loading computer programs into a memory of a portable memory object having a contactless operating mode, particularly a chip card, from one or more transmitting devices EMA, ..., EMj, ... EMp, p being a whole number, **characterized in that** it includes the following steps in which:
- the computer program is divided into n blocks BLK1, ... BLKi, ..., BLKn, n being a whole number greater than 1;
- a piece of information I(n) indicating the number n of blocks to be loaded is transmitted to the portable object;
- the blocks BLK1, ..., BLKi, ...., BLKn are loaded without contact into a memory of the portable object;
- the loading of the blocks BLK1, ..., BLK2, ..., BLKn is interrupted during the loading of a block BLKi;
- the loading of the blocks is resumed from block BLKi; and
- each block BLKi loaded is counted in the portable object.

2. Method according to any of the preceding claims, **characterized in that** it also comprises a step in which:
- means FLG of the portable object indicate to a transmitting device EMj the loading state FLG = Y or nonloading state FLG = N of the portable object.

3. Method according to claims 1 or 2, **characterized in that** it also comprises the following step in which:
- prior to the resumption of the loading of the block BLKi, the loading or nonloading state of the portable object is verified.
